# FASCICULE DE BREVET EUROPEEN

(11) **EP 1 602 578 B1**
(45) Date de publication et mention de la délivrance du brevet: **27.12.2006**
(21) Numéro de dépôt: 05291120.3
(22) Date de dépôt: 25.05.2005
(51) Int. Cl.: B64D 31/00

(54) **Avion comportant quatre moteurs à hélice propulsive**
Flugzeug mit vier Druckpropeller
Aircraft having four engines driving pusher props

(30) Priorité: 03.06.2004 FR 0405977
(43) Date de publication de la demande: 07.12.2005
(73) Titulaire: AIRBUS France, 31060 Toulouse (FR)
(72) Inventeur: Lazare, Ion, 6, Allée du Pigeonnier 31770 Colomiers (FR)
(74) Mandataire: Hauer, Bernard

(56) Documents cités:
- FR-A- 2 759 971
- GB-A- 2 185 221
- GB-A- 2 264 907
- US-A1- 2002 011 539
- ANONYMOUS: "Photos ILA 2004 - Aerospace Technology" INTERNET ARTICLE PRESS SERVICE, [Online] XP002306032 Extrait de l'Internet: URL:http://www.ila-berlin.com/ila2004/pres se/fotos2004.cfm> [extrait le 2004-11-17]

## Description

La présente invention concerne un avion comportant quatre moteurs à hélice propulsive.

Généralement, lesdits moteurs qui sont montés par paires sur les deux ailes de l'avion, sont identiques et présentent le même sens de rotation, à savoir le sens, dit rétrograde, correspondant au sens du mouvement des aiguilles d'une montre en regardant lesdits moteurs à partir de l'arrière de l'avion.

Un tel système de propulsion présente un certain nombre d'avantages, et notamment une maintenance et un entretien facilités et simplifiés, en raison de la présence de quatre moteurs identiques, et donc également de moyens auxiliaires identiques (moyens de fixation, moyens de commande, ...).

Toutefois, un tel système de propulsion présente des inconvénients, et notamment :
- une dissymétrie du flux d'air vu par le fuselage et la dérive de l'avion en raison de la dissymétrie provoquée par le sillage des hélices ; et
- un niveau de nuisance sonore élevé sur la peau du fuselage, ce qui nécessite des traitements lourds et contraignants de réduction du bruit sur l'avion.

Par le document GB-A-2 264 907, on connaît un aéronef multimoteur qui comporte au moins deux moteurs à turbine à gaz sur chaque côté d'une ligne centrale longitudinale. Les moteurs adjacents tournent en sens opposés et sont agencés en globalité de manière à être symétriques, en ce qui concerne leur sens de rotation, par rapport à un plan vertical passant par cette ligne centrale longitudinale.

La présente invention concerne un avion, comportant quatre moteurs à hélice propulsive, qui permet de remédier aux inconvénients précités.

A cet effet, selon l'invention, ledit avion comporte quatre moteurs à hélice propulsive, qui sont montés par paires sur les ailes de l'avion et qui présentent chacun un sens de rotation particulier, est remarquable en ce que lesdits quatre moteurs présentent comme sens de rotation, en regardant lesdits moteurs à partir de l'arrière de l'avion, de la gauche vers la droite, respectivement :
- le sens rétrograde correspondant au sens du mouvement des aiguilles d'une montre ;
- le sens direct correspondant au sens contraire du mouvement des aiguilles d'une montre ;
- le sens rétrograde ; et
- le sens direct.

Comme, grâce à l'invention, les deux moteurs de chaque aile sont contrarotatifs, ils concentrent l'air et engendrent un flux d'air entre eux qui est dirigé vers l'arrière en direction de la dérive. Ainsi, la dérive est soumise des deux côtés à un flux d'air convergent, ce qui augmente l'efficacité de cette dernière.

De plus, le système de propulsion conforme à l'invention présente un niveau de nuisance plus faible que celui du système de propulsion connu, rappelé ci-dessus.

L'unique figure du dessin annexé fera bien comprendre comment l'invention peut être réalisée. Elle représente schématiquement un avion conforme à l'invention.

L'invention concerne un avion 2, par exemple un avion de transport militaire, comportant un fuselage 3 pourvu, de part et d'autre, d'ailes 4 et 5 et, à l'arrière, d'une dérive 8.

Cet avion comporte :
- quatre moteurs M1, M2, M3 et M4 usuels à hélice propulsive (non représentée), qui sont montés par paires sur les ailes 4 et 5 de l'avion 2 et qui présentent chacun un sens de rotation particulier ; et
- des moyens usuels non représentés, pour retenir, approvisionner et commander de façon usuelle lesdits moteurs M1, M2, M3 et M4.

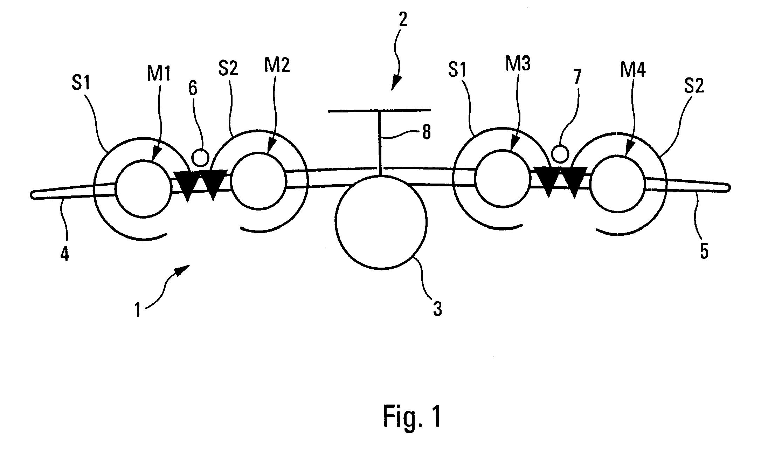

Selon l'invention, lesdits quatre moteurs présentent comme sens de rotation, en regardant lesdits moteurs à partir de l'arrière de l'avion 2 comme montré sur la figure 1, de la gauche (extrémité libre de l'aile 4) vers la droite (extrémité libre de l'aile 5), respectivement :
- le sens rétrograde S1 correspondant au sens du mouvement des aiguilles d'une montre (pour le moteur M1) ;
- le sens direct S2 correspondant au sens contraire du mouvement des aiguilles d'une montre (pour le moteur M2) ;
- le sens rétrograde S1 (pour le moteur M3) ;
- le sens direct S2 (pour le moteur M4).

Par conséquent, sur l'aile 4, les deux moteurs M1 et M2 sont contrarotatifs et l'air est concentré entre ces deux moteurs M1, M2, comme illustré par un cercle 6 sur la figure. Ce flux d'air concentré est guidé vers l'arrière en direction de la dérive 8.

De même, sur l'aile 5, les deux moteurs M3 et M4 sont contrarotatifs et l'air est concentré entre ces deux moteurs M3, M4, comme illustré par un cercle 7 sur la figure. Ce flux d'air concentré est également guidé vers l'arrière en direction de la dérive.

Ainsi, la dérive 8 est soumise des deux côtés à un flux d'air convergent, ce qui augmente son efficacité.

## Revendications

1. Avion (2) comportant un fuselage (3) pourvu, de part et d'autre, d'ailes (4, 5) et, à l'arrière, d'une dérive (8), l'avion (2) comportant quatre moteurs (M1, M2, M3, M4) à hélice propulsive, qui sont montés par paires sur les ailes (4, 5) de l'avion (2), qui présentent chacun un sens de rotation particulier qui représente le sens de rotation de l'hélice propulsive correspondante, et qui présentent comme sens de rotation, en regardant lesdits moteurs à partir de l'arrière de l'avion (2), de la gauche vers la droite, respectivement :
- le sens rétrograde (S1) correspondant au sens du mouvement des aiguilles d'une montre ;
- le sens direct (S2) correspondant au sens contraire du mouvement des aiguilles d'une montre ;
- le sens rétrograde (S1) ; et
- le sens direct (S2).

## Claims

1. Aircraft (2) comprising a fuselage (3) provided on either side with wings (4, 5) and, to the near, with a tail fin (8), the aircraft (2) comprising four engines (M1, M2, M3, M4) with pusher propellers, the engines being mounted in pairs on the wings (4, 5) of the aircraft (2) and each having a specific direction of rotation that corresponds to the direction of rotation of the corresponding pusher propeller, wherein the respective direction of rotation of said four engines (M1, M2, M3, M4) when viewing said engines from the rear of the aircraft (2) is, from left to right:
- the clockwise direction (S1);
- the counterclockwise direction (S2);
- the clockwise direction (S1); and
- the counterclockwise direction (S2).

## Patentansprüche

1. Flugzeug (2) mit einem Rumpf (3), der beidseitig mit Flügeln (4, 5) und am Heck mit einem Seitenleitwerk (8) versehen ist, wobei das Flugzeug (2) vier Motoren (M1, M2, M3, M4) für einen Druckpropeller aufweist, die paarweise auf den Flügeln (4, 5) des Flugzeugs (2) angeordnet sind, die jeweils eine spezielle Drehrichtung aufweisen, welche die Drehrichtung des entsprechenden Druckpropellers darstellt, und die bei Betrachtung der Motoren von der Heckseite des Flugzeugs (2) aus als Drehrichtung von links nach rechts jeweils aufweisen:
- die retrograde Richtung (S1) entsprechend der Bewegungsrichtung der Zeiger einer Uhr;
- die direkte Richtung (S2) entsprechend der Richtung entgegen gesetzt zur Bewegung der Zeiger einer Uhr;
- die retrograde Richtung (S1); und
- die direkte Richtung (S2).
